Europäisches Patentamt

European Patent Office

Office européen des brevets

(19)

(11) Veröffentlichungsnummer: **0 273 007**
B1

(12) **EUROPÄISCHE PATENTSCHRIFT**

(45) Veröffentlichungstag der Patentschrift:
07.02.90

(21) Anmeldenummer: 87810737.4

(22) Anmeldetag: 10.12.87

(51) Int. Cl.⁴: **B25C 1/14**

(54) **Bolzensetzgerät mit Setzanzeige.**

(30) Priorität: 20.12.86 DE 3643663

(43) Veröffentlichungstag der Anmeldung:
29.06.88 Patentblatt 88/26

(45) Bekanntmachung des Hinweises auf die Patenterteilung:
07.02.90 Patentblatt 90/6

(84) Benannte Vertragsstaaten:
CH DE FR GB LI SE

(56) Entgegenhaltungen:
DE-A- 1 603 836
DE-B- 1 478 797

(73) Patentinhaber: HILTI Aktiengesellschaft,
FL-9494 Schaan(LI)

(72) Erfinder: Thurner, Elmar, Reichsstrasse 7a,
A-6800 Feldkirch(AT)
Erfinder: Buhri, Reinhard, Bahnhofstrasse 38,
A-6820 Frastanz(AT)

(74) Vertreter: Wildi, Roland, Hilti Aktiengesellschaft
Patentabteilung, FL-9494 Schaan(LI)

**Beschreibung**

Die Erfindung betrifft ein pulverkraftbetriebenes Setzgerät zum Eintreiben von Befestigungselementen, wie Bolzen und Nägeln in harte Aufnahmematerialien, wie Beton, Stahl und dergleichen, wobei die Eintreibenergie über einen Treibkolben auf die Befestigungselemente übertragen wird und die Befestigungselemente mit wenigstens einer Führungsrondelle versehen sind.

Die sogenannte Direktmontage, dh das Eintreiben von Befestigungselementen in das Aufnahmematerial ohne vorzubohren, weist gegenüber anderen Befestigungsverfahren eine Reihe von Vorteilen auf. So sind eine Verkürzung der Montagezeit und dadurch erhebliche Kosteneinsparungen möglich. Ausserdem sind die Direktbefestigungen sofort belastbar.

Direktbefestigungen sind jedoch in der Anwendung recht anspruchsvoll. So ist die erforderliche Eintreibenergie je nach Art und Materialstärke des zu befestigenden Bauteils und der Beschaffenheit des Aufnahmematerials unterschiedlich. Bei zu hoher Eintreibenergie prallt der Treibkolben am Ende des Eintreibvorganges gegen die auf dem zu befestigenden Bauteil aufliegende Führungsrondelle. Dies ergibt einen sogenannten Prellschlag, der zu einem Lockern des eingetriebenen Befestigungselementes führen kann. In diesem Fall werden die erforderlichen Verankerungswerte der Befestigungselemente nicht erreicht.

Ein Beurteilungskriterium für den Verankerungszustand eines Befestigungselementes ist dessen Eindringtiefe in das Aufnahmematerial, welche sich insbesondere vom Verformungsgrad der im Ausgangszustand oft nicht plan ausgebildeten Führungsrondellen ableiten lässt. Eine solche Beurteilung erfordert jedoch grosse Erfahrung und Fachkenntnisse der Anwender.

Der Erfindung liegt die Aufgabe zugrunde, eine Einrichtung zu schaffen, die eine einfache Beurteilung des Verankerungszustandes von Direktbefestigungselementen ermöglicht.

Erfindungsgemäss wird dies dadurch erreicht, dass der Treibkolben an seiner in Setzrichtung vorderen Stirnseite wenigstens einen sich bei zu hoher Eintreibenergie in die Führungsrondelle einprägenden Markierungsvorsprung aufweist.

Durch das Anbringen eines Markierungsvorsprunges am Treibkolben können alle Befestigungen nach denselben Kriterien beurteilt werden. Weist bei einer fertigen Befestigung die Führungsrondelle keine Eindrücke durch den Markierungsvorsprung auf, so kann daraus geschlossen werden, dass die erforderliche Eintreibenergie nicht überschritten wurde und die vorgeschriebenen Verankerungswerte somit erreicht werden. Weist dagegen die Führungsrondelle nach abgeschlossenem Setzvorgang zusätzliche Eindrücke durch den Markierungsvorsprung auf, so kann daraus geschlossen werden, dass die erforderliche Eintreibenergie überschritten wurde und die vorgeschriebenen Verankerungswerte somit nicht gewährleistet werden können. Da dies ohne Hilfsmittel an Ort und Stelle sofort erkennbar ist, können die erforderlichen Massnahmen wie Verwendung anderer Kartuschenstärken oder Verändern der Eintreibleistung am Setzgerät unverzüglich getroffen und weitere Ausfälle dadurch verhindert werden. Die bleibenden Eindrücke an den Führungsrondellen ermöglichen bei Mehrfachbefestigungen eine objektive Gesamtbeurteilung der Befestigungssituation.

Beim Eindringen des Markierungsvorsprunges in die Führungsrondelle wird ein Teil des Werkstoffes der Führungsrondelle verdrängt. Dabei können sehr hohe Kräfte auftreten und wenigstens ein Teil der überschüssigen Eintreibenergie in Verformungsarbeit umgesetzt werden. Um dies zu erreichen ist zweckmässigerweise der Markierungsvorsprung als im Querschnitt dachartige Schneide ausgebildet. Eine solche Schneide kann bereits bei geringer Ueberenergie in die Führungsrondelle eindringen. Der Eindringwiderstand nimmt infolge der Keilform der dachartigen Schneide mit zunehmender Eindringtiefe sehr stark zu. Die auf eine Reduktion des Verankerungswertes hindeutende Markierung funktioniert somit innerhalb eines grossen Bereiches von überschüssiger Eintreibenergie.

Vorteilhafterweise ist der Markierungsvorsprung ringförmig ausgebildet. Durch eine ringförmige Ausbildung des Markierungsvorsprunges ist praktisch von allen Seiten her deutlich erkennbar, ob das Befestigungselement mit richtig dosierter oder zu hoher Eintreibenergie in das Aufnahmematerial eingetrieben wurde. Ein ringförmig ausgebildeter Markierungsvorsprung ergibt bei vorhandener überschüssiger Eintreibenergie auch dann einen Eindruck in der Führungsrondelle, wenn das Setzgerät beim Setzvorgang etwas abweichend von der senkrechten Lage zur Oberfläche des Aufnahmematerials aufgesetzt wurde.

Um eine Beschädigung der Führungsrondelle durch den Markierungsvorsprung zu vermeiden, ist es zweckmässig, den Markierungsvorsprung als Ringsegment auszubilden. Die im Falle von zu hoher Eintreibenergie an der Führungsrondelle erfolgende Markierung erstreckt sich somit nur über Teilbereiche des Umfanges der Führungsrondelle. Eine solche unterbrochene Markierung ist auch deutlich ablesbar. Falls mehrere Markierungsvorsprünge vorgesehen werden, können diese unterschiedliche Abmessungen aufweisen, so dass innerhalb des Bereiches von zu hoher Eintreibenergie verschiedene Stufen unterschieden werden können. Als Ringsegment ausgebildete Markierungsvorsprünge sind an dem in der Regel als Drehteil hergestellten Treibkolben auf einfache Weise anbringbar.

Die Erfindung soll nachstehend anhand der sie beispielsweise wiedergebenden Zeichnungen näher erläutert werden. Es zeigen:

Fig. 1 ein erfindungsgemässes Setzgerät während eines Setzvorganges, teilweise im Schnitt dargestellt,

Fig. 2 ein mit richtig dosierter Eintreibenergie gesetztes Befestigungselement, in perspektivischer Darstellung,

Fig. 3 ein mit zu hoher Eintreibenergie gesetztes Befestigungselement, in perspektivischer Darstellung.

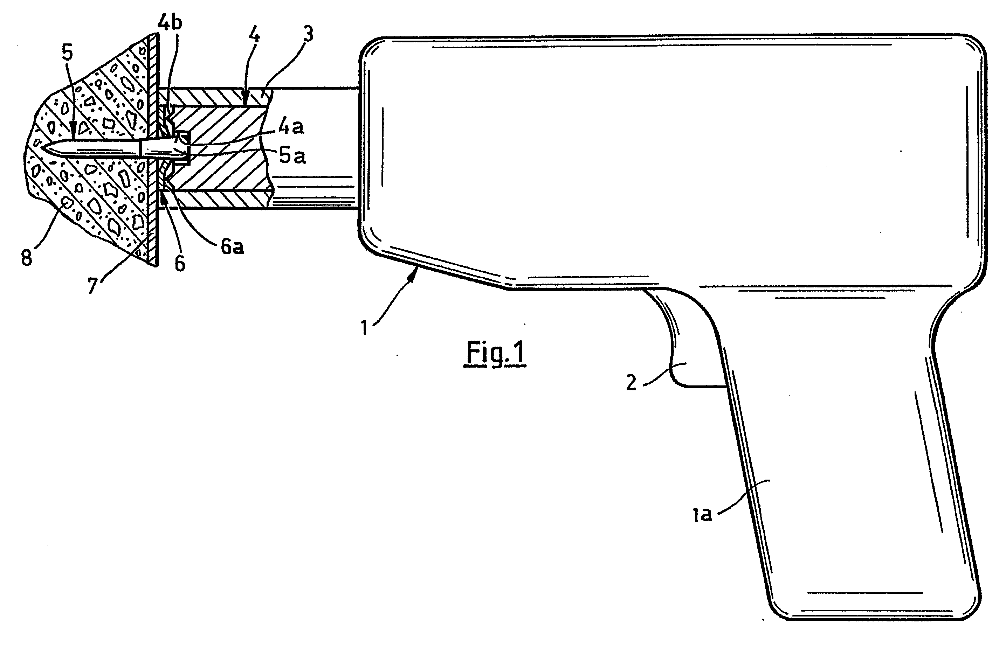

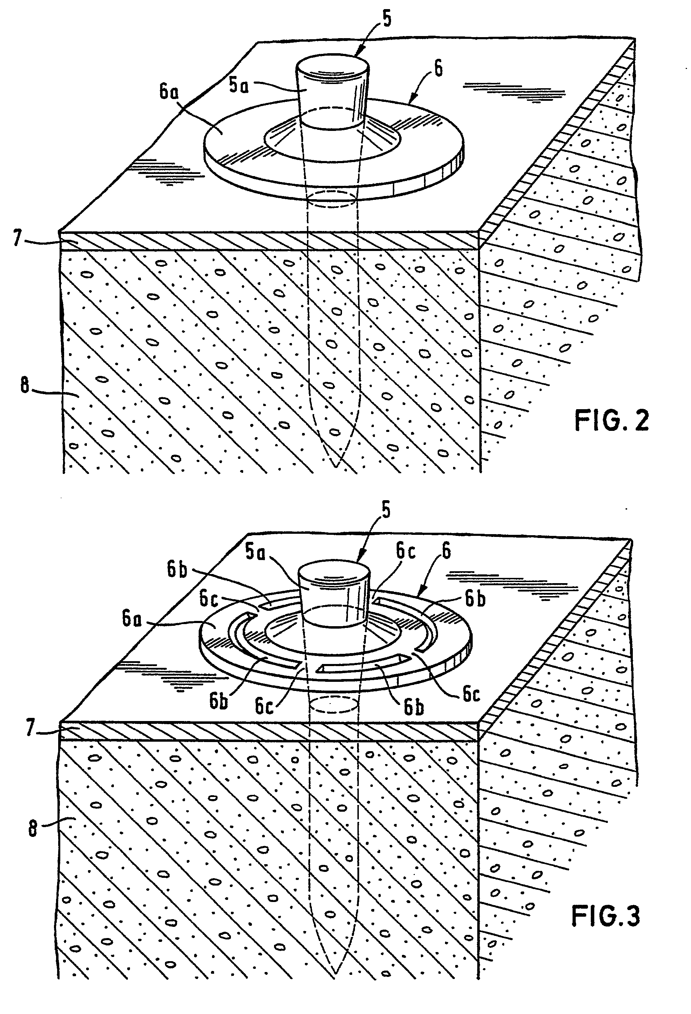

Das aus Fig. 1 ersichtliche Setzgerät weist ein insgesamt mit 1 bezeichnetes Gehäuse auf. Ein seitlich wegragender Teil des Gehäuses 1 ist als Handgriff 1a ausgebildet. Am Handgriff 1a befindet sich ein Abzug 2 zum Auslösen des Setzgerätes. In einer aus dem Gehäuse 1 ragenden, teilweise im Schnitt dargestellten Bolzenführung 3 ist ein insgesamt mit 4 bezeichneter Treibkolben axial verschiebbar gelagert. Der Treibkolben 4 weist an seiner in Setzrichtung vorderen Stirnseite eine zentrale Ausnehmung 4a sowie einen die Ausnehmung 4a umgebenden, ringförmig ausgebildeten Markierungsvorsprung 4b auf. Der Markierungsvorsprung 4b ist im Querschnitt als dachartige Schneide ausgebildet. Ein insgesamt mit 5 bezeichneter Nagel mit einem sich zum rückwärtigen Ende erweiternden Kopf 5a ist in die Ausnehmung 4a eingesetzt. Im Bereich des Kopfes 5a ist eine insgesamt mit 6 bezeichnete Führungsrondelle auf den Nagel 5 aufgesteckt. Die Führungsrondelle 6 ist etwa tellerförmig ausgebildet und weist einen planen Rand 6a auf. Bei dem in Fig. 1 dargestellten Setzvorgang ist der Nagel 5 mittels des Treibkolbens 4 durch ein Bauteil 7 hindurch in ein Aufnahmematerial 8 eingetrieben worden. Beim Eindringen des Nagels 5 in das Aufnahmematerial 8 wird die Führungsrondelle 6 im Bereich des Kopfes 5a gegen das rückwärtige Ende des Nagels 5 verschoben. Bei richtiger Dosierung der Eintreibenergie erfolgt diese Relativverschiebung der Führungsrondelle 6 auf dem Nagel 5 jedoch nur soweit, dass der Markierungsvorsprung 4b am Treibkolben 4 noch nicht in die Führungsrondelle 6 eindringt. Dieser Zustand ist in Fig. 2 dargestellt. Die Führungsrondelle 6 weist dabei im Bereich des planen Randes 6a noch keine Eindrücke auf.

Erfolgt dagegen der Setzvorgang mit zu hoher Eintreibenergie, so wird gegen das Ende des Eindringvorganges des Nagels 5 in das Aufnahmematerial 8 der Markierungsvorsprung 4b des Treibkolbens 4 in den Rand 6a der Führungsrondelle 6 eingeprägt. Dieser Zustand ist in Fig. 3 dargestellt. Die nach dem Setzvorgang in der Führungsrondelle 6 verbleibenden Eindrücke 6b lassen darauf schliessen, dass der Nagel 5 mit zu hoher Eintreibenergie in das Aufnahmematerial 8 eingetrieben wurde. Mit solchen Befestigungen können die erforderlichen Auszugswerte meist nicht mehr erreicht werden. Falls bei den fertigen Befestigungen solche Eindrücke 6b auftreten, bedeutet dies somit für die Bedienungsperson, dass die Eintreibenergie durch Verwendung anderer Kartuschenstärken oder allfälliges Verstellen einer Leistungsregulierung reduziert werden muss. Durch die Ausbildung des Markierungsvorsprunges 4b als einzelne Ringsegmente verbleiben zwischen den einzelnen Eindrücken 6b in der Führungsrondelle 6 Stege 6c, welche eine gute Beurteilung der Eindringtiefe des Markierungsvorsprunges 4b in die Führungsrondelle 6, bzw der vorhandenen Ueberenergie ermöglicht.

**Patentansprüche**

1. Pulverkraftbetriebenes Setzgerät zum Eintreiben von Befestigungselementen, wie Bolzen und Nägeln in harte Aufnahmematerialien, wie Beton, Stahl und dergleichen, wobei die Eintreibenergie über einen Treibkolben auf die Befestigungselemente übertragen wird und die Befestigungselemente mit wenigstens einer Führungsrondelle versehen sind, **dadurch gekennzichnet**, dass der Treibkolben (4) an seiner in Setzrichtung vorderen Stirnseite wenigstens einen sich bei zu hoher Eintreibenergie in die Führungsrondelle (6) einprägenden Markierungsvorsprung (4b) aufweist.

2. Setzgerät nach Anspruch 1, dadurch gekennzeichnet, dass der Markierungsvorsprung (4b) im Querschnitt als dachartige Schneide ausgebildet ist.

3. Setzgerät nach Anspruch 1 oder 2, dadurch gekennzeichnet, dass der Markierungsvorsprung (4b) ringförmig ausgebildet ist.

4. Setzgerät nach einem der Ansprüche 1 bis 3, dadurch gekennzeichnet, dass der Markierungsvorsprung (4b) als Ringsegment ausgebildet ist.

**Claims**

1. An explosive-powered setting tool for driving fastening elements, such as bolts and nails into hard reception materials, such as concrete, steel and the like, in which respect the driving-in energy is transmitted to the fastening elements by way of a driving piston and the fastening elements are provided with at least one guide washer, characterised in that the driving piston (4) has at its front end face, in the setting direction, at least one marking projection (4b) which impresses itself into the guide washer (6) in the event of too high driving-in energy.

2. A setting tool according to claim 1, characterised in that the marking projection (4b) is designed in cross-section as a roof-like cutting edge.

3. A setting tool according to claim 1 or 2, characterised in that the marking projection (4b) is annular in design.

4. A setting tool according to any one of claims 1 to 3, characterised in that the marking projection (4b) is designed as a ring segment.

**Revendications**

1. Appareil de scellement actionné par l'énergie de la poudre pour l'enfoncement d'éléments de fixation tels que des boulons et des clous dans des matériaux de réception durs, par exemple du béton, de l'acier et analogues, l'énergie d'enfoncement étant transmise aux éléments de fixation par l'intermédiaire d'un piston-poussoir et les éléments de fixation étant munis d'au moins une rondelle de guidage, caractérisé en ce que le piston-poussoir (4) comprend à sa face frontale antérieure dans la direction d'enfoncement au moins une saillie de marquage (4b) qui pénètre dans la rondelle de guidage (6) lorsque l'énergie d'enfoncement est trop grande.

2. Appareil de scellement selon la revendication 1, caractérisé en ce que, vu en coupe transversale, la saillie de marquage (4b) est conformée en tranchant en toit.

3. Appareil de scellement selon l'une des revendications 1 ou 2, caractérisé en ce que la saillie de marquage (4b) présente une forme annulaire.

4. Appareil de scellement selon l'une des revendications 1 à 3, caractérisé en ce que la saillie de marquage (4b) est conformée en segment d'anneau.

Fig.1

FIG. 2

FIG.3